**Europäisches Patentamt**

**European Patent Office**

**Office européen des brevets**

(19)

(11) Veröffentlichungsnummer : **0 358 094 B1**

(12) # EUROPÄISCHE PATENTSCHRIFT

(45) Veröffentlichungstag der Patentschrift :
**11.03.92 Patentblatt 92/11**

(51) Int. Cl.⁵ : **F16C 3/00, F16C 3/06, F16C 7/00, F16C 7/02**

(21) Anmeldenummer : **89115952.7**

(22) Anmeldetag : **30.08.89**

(54) Verfahren zur Herstellung von Perborat.

Verbunden mit 89909746.3/0433320 (europäische Anmeldenummer/Veröffentlichungsnummer) durch Entscheidung vom 16.10.91.

(30) Priorität : **08.09.88 DE 3830545**

(43) Veröffentlichungstag der Anmeldung :
**14.03.90 Patentblatt 90/11**

(45) Bekanntmachung des Hinweises auf die Patenterteilung :
**11.03.92 Patentblatt 92/11**

(84) Benannte Vertragsstaaten :
**AT BE CH DE ES FR GB IT LI LU NL SE**

(56) Entgegenhaltungen :
**EP-A- 0 155 894**
**EP-A- 0 194 952**
**DE-B- 1 037 432**
**DE-B- 1 240 508**

(73) Patentinhaber : **Degussa Aktiengesellschaft Weissfrauenstrasse 9 W-6000 Frankfurt am Main 1 (DE)**

(72) Erfinder : **Köster, Klaus, Dr.**
**Hatzfelder Strasse 185 E**
**W-5600 Wuppertal 2 (DE)**
Erfinder : **Carduck, Franz-Josef, Dr.**
**Landstrasse 18**
**W-5657 Haan (DE)**
Erfinder : **Jahnke, Ulrich, Dr.**
**Robert-Koch-Strasse 5**
**W-4019 Monheim (DE)**
Erfinder : **French, Seamus**
**Hammer-Dorf-Strasse 104**
**W-4000 Düsseldorf (DE)**

EP 0 358 094 B1

Jouve, 18, rue Saint-Denis, 75001 PARIS

## Beschreibung

Die vorliegende Erfindung betrifft die Herstellung von Natriumperborattetrahydrat und dessen Weiterverarbeitung zu Monohydrat.

Natriumperborat hat wegen seiner sicheren Handhabbarkeit und seiner chemischen Stabilität als Oxidationsmittel breite Anwendung gefunden, beispielsweise als mildes Desinfektionsmittel, vor allem aber als Bleichmittel, insbesondere bei der Textilwäsche. Natriumperborat, gemeinhin nur als Perborat bezeichnet, ist seit langem Bestandteil der meisten pulverförmigen Haushaltwaschmittel in Europa. Technisch bedeutsam sind dabei in erster Linie das sogenannte Natriumperborattetrahydrat und das sogenannte Natriumperboratmonohydrat, bei denen es sich nach heutigem Wissen in Wirklichkeit um das Hexahydrat bzw. die wasserfreie Form des ringförmigen Dinatriumdiperoxodiborats handelt. Im folgenden sollen jedoch weiterhin die gebräuchlichen Bezeichnungen Perborattetrahydrat (empirische Formel $NaBO_3 . 4 H_2O$) und Perboratmonohydrat ($NaBO_3 . H_2O$) benutzt werden. Auch die in der Praxis übliche Kennzeichnung über den Aktivsauerstoffgehalt soll im folgenden Zusammenhang Gültigkeit haben. Danach bezeichnet man als Natriumperboratmonohydrat alle Perborate, die mehr als 15 Gew.-% an Aktivsauerstoff aufweisen (Theoretischer Wert für $NaBO_3 . H_2O$ : 16,0 Gew.-% AO).

Bei der Herstellung der Perborate geht man im allgemeinen von Natriumboratlösungen aus und gewinnt daraus nach Zusatz von Wasserstoffperoxid das Tetrahydrat durch Abkühlen in kristalliner Form. Durch Entwässerung, vorzugsweise mit Warmluft in der Wirbelschicht, entsteht daraus das Monohydrat.

Mit dem Ziel, die Ausbeute und die Qualität der Perborate zu verbessern, sind eine große Zahl von Verfahrensvarianten vorgeschlagen worden, von denen aber nur wenige sich in der Praxis durchgesetzt haben. Ein bis heute nicht zur allseitigen Zufriedenheit gelöstes Problem ist die Abriebstabilität des Perboratmonohydrats. Durch den schnellen Wasseraustritt bei den üblichen Trockenverfahren bilden sich sehr poröse und leicht zerfallende Körner, mit der Folge, daß ein großer Teil des Trocknungsproduktes als Staub anfällt. Vor allem für die Anwendung in Waschmitteln ist man jedoch an abriebfestem Material interessiert, das zudem in seiner Korngröße etwa der eines Waschmittels, d. h. ca. 0,3 bis 2 mm, entsprechen sollte.

Keines der bisher für die Herstellung eines besonders abriebstabilen Monohydrates vorgeschlagenen Verfahrens ist frei von Nachteilen. So wird im Verfahren gemäß DE 19 30 286 in der Wirbelschicht mit besonders hohen Lufttemperaturen von 180 bis 210 °C gearbeitet. Derartig hohe Temperaturen sind jedoch auch für thermisch verhältnismäßig beständige Perverbindungen, wie die Perborate problematisch, und zudem ist die Anwendung so hoher Temperaturen wärmetechnisch aufwendig. Im Verfahren gemäß DE 20 40 507 wird das Monohydrat nach der üblichen Herstellung noch einmal, vorzugsweise im Drehrohr, oberflächlich befeuchtet und erneut getrocknet. Das Verfahren erfordert damit zwei zusätzliche Verfahrensstufen. Die Verfahren gemäß DE 22 58 319 und DE 24 47 780 trocknen das Tetrahydrat bei hohen relativen Luftfeuchten. Dadurch dauert jedoch die Trocknung entsprechend länger und erfordert größere Apparaturen und mehr Energie. Im Verfahren gemäß EP 194 952 wird schließlich bei der Trocknung die Temperatur der Wirbelschicht so geregelt, daß sie über der Schmelztemperatur des Tetrahydrats liegt. Auch hier ist die Gefahr der chemischen Zersetzung des Perborats gegeben. Alle vorstehend genannten Verfahren setzen zur Verbesserung der Abriebstabilität des Perboratmonohydrates bei der Stufe des Trockens von Tetrahydrat an. In der Mehrzahl der Fälle bleibt deshalb ein feinkörniger Anteil, der schon im Tetrahydrat vorhanden war, auch im Monohydrat erhalten und muß daraus gegebenenfalls entfernt werden.

Andererseits wurde auch festgestellt, daß man ein abriebstabiles Monohydrat einfacher dadurch erhalten kann, daß man zur Trocknung ein besonders vorbehandeltes Tetrahydrat einsetzt. Geht man bei der Trocknung von einem Perborattetrahydrat aus, das gemäß DE 10 52 372 unter partieller Erweichung beispielsweise mit Hilfe einer Strangpresse granuliert wurde, so erhält man ohne besondere Aufwendungen bei der Trocknung ein abriebstabiles Monohydrat, das weitgehend frei von feinen Anteilen ist. Die Schwierigkeiten liegen bei diesem Herstellungsweg auf der Stufe der Tetrahydratgranulation: Der Temperaturbereich, in dem pulverförmiges Perborattetrahydrat die zum Strangpressen gemäß DE 10 52 372 geeignete Plastizität aufweist, ist mit etwa 2 °C äußerst klein. Unterhalb dieses Bereichs findet auch unter dem Druck eines Extruders keine ausreichende Agglomeration statt, oberhalb des Bereiches schmilzt das Tetrahydrat soweit auf, daß die Stränge nach Verlassen des Extruders verkleben und nicht weiter verarbeitet werden können. Die Einhaltung des schmalen Temperaturbereiches von 2 °C bereitete in der Praxis wegen der bekanntermaßen schwierigen Temperaturführung im Extruder so große Probleme, daß das Verfahren gemäß DE 10 52 372 nie zum großtechnischen Einsatz kam.

Überraschenderweise wurde jetzt gefunden, daß der Temperaturbereich, in dem Perborattetrahydrat eine für das Strangpressen geeignete Plastizität aufweist, erheblich erweitert werden kann, wenn dem Tetrahydrat bestimmte polymere organische Verbindungen zugesetzt werden.

Ein erster Gegenstand der Erfindung ist daher ein Verfahren zur Herstellung eines körnigen Natriumperborattetrahydrates, bei dem pulverförmiges Perborattetrahydrat durch Erwärmen unter Druck erweicht, die plastisch deformierbare, jedoch nicht zerfließende Masse durch Pressen in dünne Stränge verformt und diese zerkleinert werden, dadurch gekennzeichnet, daß man dem Perborattetrahydrat vor der Verarbeitung 0,3 - 5 Gewichtsprozent eines Natrium- oder Kaliumsalzes einer polymeren Carbonsäure zumischt, wobei diese Carbonsäure eine Säurezahl zwischen etwa 100 und etwa 1000, vorzugsweise zwischen etwa 150 und etwa 900, sowie ein mittleres Molekulargewicht zwischen etwa 4000 und etwa 300 000, vorzugsweise zwischen etwa 4000 und etwa 150 000, aufweist.

Durch den erfindungsgemäßen Zusatz der polymeren Alkalisalze erweitert sich der Temperaturbereich, in dem das Tetrahydrat eine ausreichende Plastizität aufweist und problemlos verarbeitet werden kann, auf 5 bis 8 °C und erreicht damit eine Breite, die einen großtechnischen und weitgehend störungsfreien Betrieb möglich macht. Selbst in großen Extrusionsanlagen mit sehr trägem Temperaturregelverhalten ist die Einhaltung der genannten Temperaturbereiche ohne weiteres möglich. Gleichzeitig wirkt sich der Polymerzusatz nicht negativ auf das Trocknungsverhalten des auf diese Weise gekörnten Tetrahydrates aus, so daß die Trocknung schnell und energiesparend einstufig in herkömmlichen Anlagen durchgeführt werden kann und ein außergewöhnlich abriebstabiles, staubfreies Monohydrat liefert.

Bei den erfindungsgemäß eingesetzten polymeren Salzen handelt es sich vorzugsweise um solche Salze, bei denen durchschnittlich mehr als 50 Molprozent der in der polymeren Carbonsäure vorliegenden Säuregruppen in der Salzform vorliegen. Besonders bevorzugt sind Verbindungen, bei denen mehr als 80 Molprozent, insbesondere mehr als 90 Molprozent der Säuregruppen in der Salzform vorliegen. Weiterhin werden von den genannten Alkalisalzen wiederum die Natriumsalze bevorzugt.

Die erfindungsgemäß geeigneten Salze, beziehungsweise die ihnen zugrunde liegenden polymeren Carbonsäuren, können auf an sich bekannten Wegen hergestellt werden. So lassen sich Polymere, die frei sind von Carboxylgruppen, durch polymeranaloge Reaktionen in polymere Carbonsäuren (bzw. deren Salze) überführen. Beispiele für diese gegebenenfalls nur partiell durchzuführende Reaktion sind die Hydrolyse von Polyacrylamid und die Carboxymethylierung von Cellulose. Eine andere Möglichkeit besteht darin, polymerisierbare Carbonsäure oder deren Salze zu homopolymerisieren oder mit geeigneten Comonomeren zu copolymerisieren und gegebenenfalls mit Alkalien zu neutralisieren. Beispiele für diesen Herstellungsweg sind die Homopolymerisation von Acrylsäure und die Copolymerisation von Acrylsäure mit Ethylen.

Bevorzugt werden im Rahmen der Erfindung die Natriumsalze von Carboxymethylcellulosen mit Substitutionsgraden (Zahl der Carboxymethylgruppen pro Anhydroglucoseeinheit, DS) von etwa 0,5 bis etwa 1, vorzugsweise 0,6 bis 0,9, und insbesondere die Natriumsalze von Copolymerisaten aus Acrylsäure und/oder Methacrylsäure mit Maleinsäure im Molverhältnis von etwa 10 : 1 bis etwa 1 : 10, vorzugsweise etwa 2 : 1 bis etwa 1 : 5. Die Molekulargewichte liegen im Falle der Carboxymethylcellulosen vorzugsweise zwischen etwa 50 000 und etwa 150 000, insbesondere zwischen etwa 70 000 und etwa 100 000; im Falle der Maleinsäure-Copolymerisate vorzugsweise zwischen etwa 50 000 und 200 000 und insbesondere zwischen etwa 50 000 und 150 000. (Bestimmt mit Hilfe der Gelpermeationschromatographie und ausgedrückt als Gewichtsmittel.) Die Salze der Carboxymethylcellulose werden vielfach allein durch die Viskosität der wäßrigen Lösungen charakterisiert. Erfindungsgemäß geeignet sind danach CMC-Na-Salze, die in technischer Qualität (Gehalt etwa 50 - 80 %) Viskositäten von vorzugsweise 200 - 8000 mPas, insbesondere 1500 - 4000 mPas (als 5 %ige wäßrige Lösung) und in gereinigter Form (als 2 %ige wäßrige Lösung) Viskositäten von vorzugsweise 200 - 5000 mPas, insbesondere 1500 - 4000 mPas aufweisen (Messung nach Brookfield bei 20 °C und 20 Upm). Die vorgenannten, für das erfindungsgemäße Verfahren besonders geeigneten Polymersalze zeichnen sich dadurch aus, daß sie den Plastizitätsbereich des Perborattetrahydrates auf bis zu 8 °C ausdehnen. Weiterhin ist als vorteilhaft anzusehen, daß der Verbleib dieser Salze im Perborattetrahydrat die Eigenschaften des daraus durch Trocknung hergestellten Monohydrats, insbesondere dessen Abriebstabilität, zusätzlich verbessern. Weiterhin stören die polymeren Additive die Anwendung der Perborate in Waschmitteln in keiner Weise.

Das erfindungsgemäße Verfahren unterscheidet sich vom Verfahren der DE 10 52 372 ganz wesentlich durch den Zusatz der genannten polymeren Salze. Dieser Zusatz kann prinzipiell zu jeder Zeit vor der Verarbeitung des Tetrahydrates im Extruder erfolgen, beispielsweise durch Zugabe vor oder während der Kristallisation im Rahmen der Tetrahydrat-Herstellung. Vorzugsweise erfolgt die Zumischung der polymeren Salze aber unmittelbar vor der Verarbeitung in der Strangpreßvorrichtung, wobei ein eigener Mischapparat vorgesehen werden kann. Besonders bevorzugt ist aber die gemeinsame oder gleichzeitige Dosierung von Perborattetrahydrat und polymerem Salz in die Strangpresse, wobei zur gleichmäßigen Vermischung die Turbulenzen im Einzugsbereich des Gerätes ausgenutzt werden. Das polymere Salz kann in trockener Form oder, vorzugsweise, in Form einer konzentrierten wäßrigen Zubereitung dem Perborattetrahydrat zugesetzt werden. Bei Verwendung in Form einer konzentrierten wäßrigen Zubereitung, die das polymere Salz in einer Menge von wenigstens 20 Gewichtsprozent, vorzugsweise wenigstens 40 Gewichtsprozent, enthält, scheinen sich Perborat und polymeres Salz schneller zu mischen. Die Anwesenheit des Wassers stört die Weiterverarbeitung des

3

Tetrahydrates, das vorzugsweise in das Monohydrat übergeführt wird, nicht. Die Menge an polymerem Salz, die dem Tetrahydrat zugesetzt wird, bestimmt in gewissem Umfang die Breite des Temperaturbereichs, in dem eine für den Extrusionsvorgang geeignete Plastizität vorliegt. Sie liegt üblicherweise zwischen 0,3 und 5 Gewichtsprozent. Als besonders gut geeignet haben sich Mengen von 0,5 bis 3 Gewichtsprozent, gerechnet als polymeres Salz (bei technischer Reinheit nur die Aktivsubstanz) und bezogen auf das als Ausgangsmaterial eingesetzte Perborattetrahydrat, erwiesen. Optimale Ergebnisse, auch im Hinblick auf das Kosten-Nutzen-Verhältnis, erzielt man mit Zusätzen von 0,8 bis 1,5 Gewichtsprozent an polymerem Salz.

Als Ausgangsmaterial für das erfindungsgemäße Granulationsverfahren wird in erster Linie kristallines Perborattetrahydrat verwendet, dessen Korngröße kleiner ist als die kleinste Abmessung der Löcher in der verwendeten Siebplatte. Vorzugsweise weist das Ausgangsmaterial ein Maximum der Korngrößenverteilung unterhalb der halben kleinsten Lochabmessung auf. Besonders bevorzugt wird staubförmiges Perborattetrahydrat, d. h. Material mit einer mittleren Korngröße deutlich unterhalb von 0,2 mm, wie es bei der Produktion von kristallinem Tetrahydrat als meist unerwünschte Fraktion anfällt. Das Ausgangsmaterial kann trocken eingesetzt werden oder aber bis zu 5 Gewichtsprozent an Wasser über den Hydratwassergehalt hinaus enthalten. Geeignet ist also auch zentrifugenfeuchtes Material. Besonders vorteilhaft ist ein Wassergehalt von etwa 1 bis 2 Gewichtsprozent, bezogen auf reines Tetrahydrat. Höhere Wassergehalte erfordern etwas niedrigere Extrusionstemperaturen. Andererseits ist es auch möglich, von Perboraten auszugehen, die weniger Hydratwasser als das Tetrahydrat enthalten, wenn vor der Granulation entsprechend mehr Wasser zugesetzt wird.

Für die Durchführung des erfindungsgemäßen Verfahrens eignen sich praktisch alle Geräte, die es erlauben, plastifizierbare Materialien unter Druck zu Strängen zu formen. Dazu zählen beispielsweise Walzenpressen, Pelletisiergeräte und Lochpressen. Ganz besonders werden Extruder mit Düsenplatten und Kneter mit Siebkorbgranuliervorrichtung bevorzugt. Dabei werden runde Durchtrittsöffnungen bevorzugt, die Durchmesser zwischen 0,5 und 2 mm, insbesondere 0,8 bis 1,2 mm aufweisen. Die Zerkleinerung der Stränge wird in diesen Fällen durch rotierende bzw. umlaufende Messer vorgenommen. Im übrigen sei auf die ausführlichen Darstellungen in der DE 1 052 372 hingewiesen, auf die hier ausdrücklich Bezug genommen wird.

Nach dem Verlassen des Granulationsgerätes wird das Perborattetrahydrat abgekühlt, wobei wie in der DE 1 052 372 die Abkühlung mit kalter Luft bevorzugt wird. Es resultiert ein staubarmes Natriumperborattetrahydrat mit sehr enger, genau einstellbarer Kornverteilung, hohem Schüttgewicht und hoher mechanischer Stabilität. Trotz seiner kompakten Form löst sich das Produkt in Wasser ähnlich schnell wie handelsübliches Tetrahydrat.

Das nach dem erfindungsgemäßen Verfahren erhältliche Natriumperborattetrahydrat ist daher ein eigener Gegenstand der Erfindung. Dieses Material eignet sich ohne weiteres direkt für den Einsatz in Waschmitteln. Vorzugsweise wird es aber in Natriumperboratmonohydrat übergeführt und erst in dieser Form verwendet.

Der zusätzliche Verfahrensschritt besteht in der Trocknung des erfindungsgemäßen Tetrahydrates unter Entzug von bis zu 3 Mol Hydratwasser sowie gegebenenfalls anhaftender Feuchtigkeit. Er ist ein weiterer Gegenstand der Erfindung. Für den Trocknungsschritt eignen sich prinzipiell nahezu alle bekannten Trocknungsverfahren, soweit sie nicht zu einer Zersetzung des Perborats oder zu einer Übertrocknung unter Bildung unerwünschter Oxoborate führen. Dies ist insbesondere dann der Fall, wenn die einzelnen Körner zu hohe Temperaturen erreichen können. Vorzugsweise wird die Trocknung daher im Gas- oder Luftstrom durchgeführt, wobei die Trocknung mit Hilfe von Wirbelbetttrocknern oder Vibrationstrockner besonders bevorzugt wird. Bei Anwendung dieser Geräte kann beispielsweise mit Lufteintrittstemperaturen von 100 bis 180 °C gearbeitet werden, wenn gleichzeitig darauf geachtet wird, daß die Produkttemperatur auch gegen Ende des Trockenvorganges etwa 70 °C nicht überschreitet. Vorzugsweise wird so gearbeitet, daß bei einer Lufteintrittstemperatur von 120 bis 140 °C und Luftgeschwindigkeiten von 0,9 bis 1,1 m/s getrocknet wird und die Produkttemperatur gegen Ende zwischen 60 und 65 °C liegt. Schließt sich die Trocknung des Tetrahydrates unmittelbar an die Granulierung des Tetrahydrates an, so kann die Abkühlung des Tetrahydrates nach dem Granulationsschritt weitgehend oder vollständig unterbleiben. Nach dem Ende des Entwässerungsprozesses wird das Monohydrat im Luftstrom soweit abgekühlt, daß eine problemlose Lagerung möglich ist.

Das erfindungsgemäße Trocknungsverfahren ist einstufig durchführbar und erfordert keine zusätzlichen Maßnahmen. Es führt sehr schnell zum Ziel und erlaubt daher, bezogen auf den Produktdurchsatz, die Anwendung kleiner Anlagen. Trotz des hohen Produktdurchsatzes bildet sich nur wenig Staub. Der Staub wird im allgemeinen mit der Abluft ausgetragen und ausgefiltert. Er kann in den meisten Fällen wegen seiner geringen Mengen dem Endprodukt beigemengt werden, in anderen Fällen wird er in den Granulationsprozeß des Tetrahydrates eingebracht.

Das körnige Endprodukt weist eine außerordentlich große Abriebfestigkeit auf und hat ein hohes Schüttgewicht, löst sich aber in Wasser ebenso schnell wie käufliches Perboratmonohydrat. Das mit dem erfindungsgemäßen Verfahren erhältliche Natriumperboratmonohydrat ist daher ein weiterer Gegenstand der vorliegenden Erfindung.

Als Anwendungsgebiete kommen für die neue technische Form des Perboratmonohydrats alle für herkömmliches Monohydrat bekannten Gebiete in Betracht. Es eignet sich beispielsweise für den Einsatz als Bleich- und Desinfektionsmittel, als Oxidationsmittel oder als Träger von Aktivsauerstoff für andere Zwecke, und es läßt sich zu Oxoborat weiter verarbeiten. Bevorzugtes Einsatzgebiet ist jedoch die Anwendung in Wasch- und Reinigungsmitteln aller Art, wo die hohe Abriebfestigkeit und das enge Kornspektrum besonders vorteilhaft zur Geltung kommen.

Beispiele

Beispiel 1

Perborattetrahydrat, wie es in Staubform bei der Trocknung von kristallinem Perborattetrahydrat anfällt (Kornverteilung: 90 % unter 0,2 mm) und das zusätzlich zum Hydratwasser 1,5 % Feuchtigkeit enthielt, wurde mit 2,5 Gew.-% einer 40 %igen Lösung des Natriumsalzes eines Copolymerisates aus Acrylsäure und Maleinsäure (Gewichtsverhältnis 78 : 22, Sokalan[R] CP 5 der Firma BASF, DE) gleichmäßig bedüst. Die Mischung wurde dann mit 20 kg/h in einem Kokneter des Typs PR 46 (Firma Buss, Pratteln, CH) mit Siebkorbgranulator (Lochdurchmesser 0,8 mm) extrudiert. Die Heizung des Kneters erfolgte mit Warmwasser. Bei Produkttemperaturen zwischen 54 und 62 °C wies das Tetrahydrat eine für die Verstrangung ausreichende Plastizität auf und konnte in Form dünner Stränge extrudiert und durch ein über die Extruderwelle angetriebenes umlaufendes Messer in Form kurzer Stäbchen konfektioniert werden (Messerdrehzahl 120 Upm, Messerabstand zum Siebkorb 2,5 mm).

Das resultierende Abschlaggranulat, das beim Abkühlen sofort erstarrte, hatte eine enge Kornverteilung und war praktisch staubfrei: Siebanalyse (Gew.-%):

```
auf  1,6  mm  :      0,4 %

auf  0,8  mm  :     85   %

auf  0,4  mm  :      8,3 %

auf  0,2  mm  :      3,5 %

auf  0,1  mm  :      1,7 %

auf  0,05 mm  :      1   %

darunter      :      0,1 %
```

Die Schüttdichte betrug 670 g/l; der Aktivsauerstoffgehalt entsprach mit 10,2 Gew.-% dem des Ausgangsmaterials.

Zur Bestimmung der Abriebfestigkeit wurden 100 g des Produktes 5 Minuten in einer Kugelmühle aus Porzellan (innerer Durchmesser 130 mm, Höhe 100 mm, 8 Stahlkugeln von 20 mm Durchmesser) bei einer Drehzahl von 150 Upm gemahlen. Danach wurde erneut der Feinkornanteil unter 0,2 mm durch Siebanalyse bestimmt. Er hatte nur um 3,1 % zugenommen.

Beispiel 2

Wie in Beispiel 1 wurde jetzt Perborat-Feinstaub verarbeitet, der 4 % Feuchtigkeit enthielt. Hier lag der für die Plastifizierung geeignete Temperaturbereich bei 52 bis 60 °C. Der Kokneter wurde mit einer Schneckendrehzahl von 150 Upm betrieben, so daß das Abschlaggranulat etwas feiner wurde.

Siebanalyse:

```
auf 1,6 mm    :        1,0 %
auf 0,8 mm    :       65,0 %
auf 0,4 mm    :       22,8 %
auf 0,2 mm    :        5,8 %
auf 0,1 mm    :        3,6 %
auf 0,5 mm    :        1,7 %
darunter      :        0,2 %
```

Die Schüttdichte betrug 700 g/l. Im Test auf Abriebfestigkeit (Kugelmühle) nahm der Anteil unter 0,2 mm nur um 0,8 % zu.

Beispiel 3

Dieselben Ausgangsmaterialien wie in Beispiel 2 wurden hier mit Hilfe eines Doppelschnecken-Extruders (Typ Labor-Presse D 91 000 000, gegenläufige Förderschnecken, 6 D, Firma Lihotzky, Plattling, DE) durch eine Düsenplatte (Lochdurchmesser 0,8 mm) zu Strängen geformt und mit Hilfe eines umlaufenden Messers auf Längen von 0,8 - 1,2 mm geschnitten. Die Beheizung des Extruders erfolgte mit Warmwasser so, daß die Produktaustrittstemperatur zwischen 53 und 59 °C lag. Das Granulat war praktisch staubfrei (Kornanteil unter 0,2 mm kleiner als 1 %) und sehr abriebfest. Im Test nahm der Staubanteil unterhalb 0,2 mm um nicht mehr als 5% zu.

Beispiel 4

In derselben Weise wie in Beispiel 1 wurde hier zentrifugenfeuchtes (4 % $H_2O$) Perborattetrahydrat-Kristallisat mit folgender Siebanalyse verarbeitet:

```
auf 1,6  mm   :        0   %
auf 0,8  mm   :        1,6 %
auf 0,4  mm   :       66,8 %
auf 0,2  mm   :       24,0 %
auf 0,1  mm   :        3,0 %
auf 0,05 mm   :        2,7 %
darunter      :        1,8 %
```

Die Extrusion erfolgte nach Zusatz von 0,5 Gew.-% Sokalan CP 5 in Form einer 40 %igen wäßrigen wäßrigen Lösung; der Plastizitätsbereich lag bei 50 - 58 °C. Das Produkt wies ein Schüttgewicht von 660 g/l auf und zeigte folgende Siebanalyse:

```
auf 1,6  mm  :      0   %

auf 0,8  mm  :     89   %

auf 0,4  mm  :      8,6 %

auf 0,2  mm  :      1,5 %

auf 0,1  mm  :      0,7 %

auf 0,05 mm  :      0,1 %

darunter     :      0,1 %
```

Im Abriebtest stieg der Anteil unter 0,2 mm um 3,3 %. Demgegenüber nahm bei dem als Ausgangsmaterial eingesetztem Kristallisat im selben Test der Anteil unter 0,2 mm um 9,5 % zu.

Beispiel 5 (Vergleich)

Das Verfahren nach Beispiel 1 wurde in gleicher Weise, jedoch ohne Zusatz des Polymersalzes, durchgeführt. Der für die Verstrangung geeignete Temperaturbereich lag dabei zwischen 57 und 59 °C und konnte nur über mehr oder weniger kurze Zeiten exakt eingehalten werden. Das Produkt, das bei vorgesehener Temperatur extrudiert wurde, wies im Gegensatz zum Produkt des Beispiels 1 deutlich höhere Anteil mit Korngrößen über 1,6 mm auf. Dies ist ein Hinweis darauf, daß selbst bei Einhaltung des Temperaturintervalls örtliche oder zeitliche Überhitzungen, die zu einem Verbacken der Stränge führten, nicht ganz zu vermeiden waren:

Siebanalyse:

```
auf 1,6  mm  :      9,2 %

auf 0,8  mm  :     82,7 %

auf 0,4  mm  :      7,5 %


auf 0,2  mm  :      0,3 %

auf 0,1  mm  :      0,1 %

auf 0,05 mm  :      0,1 %

darunter     :      0,1 %
```

Schüttgewicht 660 g/l

Beispiel 6

Perborattetrahydrat-Feinstaub (mit 1,5 % Feuchtigkeit) wurde in einem Lödige-Mischer mit 4 Gew.-% einer Lösung vermischt, die 25 Gew.-% des Natriumsalzes eines Maleinsäure-Olefin-Copolymerisats (Sokalan[(R)]CP 9, Molekulargewicht 12000, Firma BASF, DE) enthielt. Das Gemisch wurde im Buss-Kneter (wie in Beispiel 1) bei 52 °C mit einem Durchsatz von 15 kg/h extrudiert. Der Plastizitätsbereich lag hier bei 51 - 58 °C. Das fertige Produkt wies eine Schüttdichte von 610 g/l auf und hatte folgende Korngrößenverteilung:

7

```
auf 1,6 mm      2,0 %

auf 0,8 mm     58   %

auf 0,4 mm     34,4 %

auf 0,2 mm      4,9 %

darunter        1,7 %
```

Im Abriebtest nahm der Anteil unter 0,2 mm nur um 5,5 % zu.

Beispiel 7

Von dem in Beispiel 1 hergestellten Tetrahydrat-Granulat wurden 2 kg in einem Labor-Wirbelschichttrockner vom Typ STREA-1 (Firma Aeromatik, Bubendorf, CH) mit Warmluft getrocknet. Die Trockenbedingungen waren: Lufteintrittstemperatur 120 °C, Luftstrom 55 m³/h, Luftaustrittstemperatur am Ende der Trocknung 62 °C, Trocknungszeit 45 Minuten. Es resultierte ein Perboratmonohydrat mit einem Aktivsauerstoffgehalt von 15,7 Gew.-%, einem Schüttgewicht von 542 g/l und folgender Siebanalyse:

```
auf 1,6  mm  :      1,1 %

auf 0,8  mm  :     66,8 %

auf 0,4  mm  :     28,2 %

auf 0,2  mm  ;      3,5 %

auf 0,1  mm  :      0,2 %

auf 0,05 mm  :      0,1 %

darunter     :      0,1 %
```

Im Abriebtest (wie in Beispiel 1) nahm die Fraktion unter 0,2 mm nur um 5,4 % zu.

Beispiel 8

In einem kontinuierlich betriebenen Wirbelschichttrockner mit 0,4 m² Trocknungsfläche (Firma Allgaier, Uhingen, DE) wurde Tetrahydrat-Granulat aus Beispiel 1 in einer Menge von 80 kg/h getrocknet. Dabei wurden 49,5 kg/h an Monohydrat (15,3 % AO) und als Filterrückstand aus der Abluft 4,1 kg/h an Staub (12,6 % AO) erhalten. Die Trocknungsbedinaungen waren: Lufteintrittstemperatur 120 °C, Luftmenge 1420 m³/h, Produkttemperatur 68 °C. Das austretende Monohydrat wurde in einer nachgeschalteten Kühlzone mit Luft auf 25 °C abgekühlt und dann gelagert.

Das Produkt hatte ein Schüttgewicht von 535 g/l und wies folgende Siebanalyse auf:

```
auf 1,6  mm  :      4,3 %

auf 0,8  mm  :     71,8 %

auf 0,4  mm  :     23,1 %


auf 0,2  mm  :      0,5 %

auf 0,1  mm  :      0,1 %

auf 0,05 mm  :      0,2 %

darunter     :      0
```

Im Abriebtest nahm die Fraktion unter 0,2 mm nur um 10,8 % zu. Im vorliegenden Versuch lag die Trocknerleistung bei 125 kg/h.m$^2$ und damit etwa dreimal höher als wenn im gleichen Trockner gemäß DE 22 58 319 mit feuchter Luft getrocknet wurde. Trotzdem war das erhaltene Produkt äußerst abriebfest.

Beispiel 9 (Vergleich)

Unter den in Beispiel 7 beschriebenen Bedingungen wurde ungranuliertes Perborattetrahydratkristallisat (wie in Beispiel 4 verwendet) in der Aeromatic-Wirbelschicht getrocknet. Es resultierte ein Monohydrat mit einem Schüttgewicht von 492 g/l und folgender Siebanalyse:

```
auf 1,6  mm :      0   %
auf 0,8  mm :      0,9 %
auf 0,4  mm :     75,6 %
auf 0,2  mm :     21,7 %
auf 0,1  mm :      1,4 %
auf 0,05 mm :      0,3 %
darunter     :      0,1 %
```

Das Material war nicht abriebfest; im Test nahm die Fraktion unter 0,2 mm um 35,3 % zu.

Beispiel 10

In einen kontinuierlich betriebenen Kokneter (Firma Buss, Pratteln, CH) wurden 650 kg/h an Perborattetrahydrat-Feinstaub, 10 kg/h an pulverförmiger Na-Carboxymethylcellulose (DS 0,8 - 0,95, etwa 65 %ig; Relatin$^{(R)}$ U 300, Firma Henkel, DE,) und 15 kg/h an Wasser eingetragen und bei einer Heiztemperatur von 65 °C vermischt. Das plastifizierte Material wurde über einen Siebkorb (Lochdurchmesser 1 mm) extrudiert und geschnitten. Die Austrittstemperatur des Produktes lag zwischen 55 und 60 °C. Es wurde ein praktisch staubfreies Produkt erhalten, dessen Korngröße zu 98 % zwischen 0,4 und 1,6 mm lag. Im Abriebtest nahm der Kornanteil unter 0,2 mm nur um 5 % zu.

Ein Teil des anfallenden Produktes wurde in einem Aeromatic-Wirbelschichttrockner (Laborgerät) bei einer Zulufttemperatur von 120 °C zu Monohydrat mit 15,4 % AO getrocknet. Das Produkt wies in der Siebanalyse folgende Kornverteilung auf:

```
auf 0,4 mm : 91 %
auf 0,2 mm:   6 %
darunter      3 %
```

Im Abriebtest nahm die Fraktion unter 0,2 mm nur um 8 % zu.

**Patentansprüche**

1. Verfahren zur Herstellung eines körnigen Natriumperborattetrahydrates, bei dem pulverförmiges Perborattetrahydrat durch Erwärmen unter Druck erweicht, die plastisch deformierbare Masse durch Pressen in dünne Stränge verformt und diese zerkleinert werden, dadurch gekennzeichnet, daß man dem pulverförmigen Tetrahydrat vor der Verarbeitung 0,3 bis 5 Gewichtsprozent eines Natrium- oder Kaliumsalzes einer polymeren Carbonsäure zumischt, wobei diese Carbonsäure eine Säurezahl zwischen 100 und 1000 sowie ein mittleres Molekulargewicht zwischen 4000 und 300 000 aufweist.

2. Verfahren nach Anspruch 1, bei dem als polymeres Salz Natriumcarboxymethylcellulose mit einem Substitutionsgrad zwischen 0,5 und 1 oder das Natriumsalz eines Copolymerisats von Acrylsäure und/oder Methacrylsäure mit Maleinsäure im Molverhältnis 10 : 1 bis 1 : 10 eingesetzt wird.

EP 0 358 094 B1

3. Verfahren nach einem der Ansprüche 1 oder 2, bei dem 0,5 bis 3 Gew.-%, vorzugsweise 0,8 bis 1,5 Gew.-% des polymeren Salzes zugesetzt werden.

4. Verfahren nach einem der Ansprüche 1 bis 3, bei dem die polymeren Salze in Form einer wäßrigen Zubereitung zugesetzt werden, die wenigstens 20 Gew.-%, vorzugsweise enigstens 40 Gew.-% an Salz enthält.

5. Verfahren nach einem der Ansprüche 1 bis 4, das in einem Extruder mit Siebplatte oder in einem Kneter mit Siebkorbgranuliervorrichtung durchgeführt wird.

6. Verfahren nach einem der Ansprüche 1 bis 5, bei dem das polymere Salz unmittelbar vor dem Verarbeiten in der Strangpreßvorrichtung zugemischt wird.

7. Perborattetrahydrat, erhältlich nach einem der Ansprüche 1 bis 6.

8. Verfahren zur Herstellung von Perboratmonohydrat durch Entwässerung von Perborattetrahydrat, dadurch gekennzeichnet, daß von einem Perborattetrahydrat gemäß Anspruch 7 ausgegangen wird.

9. Verfahren nach Anspruch 8, bei dem die Entwässerung in einem Wirbelschichttrockner oder einem Vibrationstrockner mit Hilfe von Warmluft vorgenommen wird.

10. Perboratmonohydrat, erhältlich nach einem Verfahren gemäß einen der Ansprüche 8 oder 9.


## Claims

1. A process for the preparation of a granular sodium perborate tetrahydrate in which the pulverulent perborate tetrahydrate is made to escape by heating under pressure and the plastically deformable mass is moulded into thin strands by pressure and the said strands are size reduced, characterised in that from 0.3 to 5 per cent by weight of a sodium or potassium salt of a polymeric carboxylic acid are added to the pulverulent tetrahydrate before processing, the said carboxylic acid having an acid number of from 100 to 1000 and an average molecular weight of from 4000 to 300 000.

2. A process according to claim 1, in which the polymeric salt used is sodium carboxymethyl cellulose having a degree of substitution of from 0.5 to 1 or the sodium salt of a copolymer of acrylic acid and/or methacrylic acid with maleic acid in a molar ratio of from 10:1 to 1:10.

3. A process according to one of the claims 1 or 2, in which from 0. 5 to 3 % by weight, preferably from 0.8 to 1.5% by weight, of the polymeric salt are added.

4. A process according to one of the claims 1 to 3, in which the polymeric salts are added in the form of an aqueous preparation containing at least 20% by weight, preferably not less than 40% by weight, of salt.

5. A process according to one of the claims 1 to 4 which is carried out in an extruder with sieve plate or in a kneader with screen cage granulating device.

6. A process according to one of the claims 1 to 5, in which the polymeric salt is added immediately before the processing in the extruder.

7. Perborate tetrahydrate obtainable according to one of the claims 1 to 6.

8. A process for the preparation of perborate monohydrate by the dehydration of perborate tetrahydrate, characterised in that a perborate tetrahydrate according to claim 7 is used as starting material.

9. A process according to claim 8, in which dehydration is carried out in a fluidised bed drier or a vibration drier with the aid of hot air.

10. Perborate monohydrate obtainable by a process according to one of the claims 8 or 9.


## Revendications

1. Procédé pour la préparation d'un perborate de sodium tétrahydraté granulaire, dans lequel on ramollit par chauffage sous pression du perborate tétrahydraté pulvérulent, la masse plastiquement déformable est mise par compression sous forme de minces boudins et on fragmente ceux-ci, caractérisé en ce que avant la transformation, on ajoute au tétrahydrate pulvérulent de 0,3 à 5 % en poids d'un sel de sodium ou de potassium d'un acide carboxylique polymère, cet acide carboxylique présentant un indice d'acide compris entre 100 et 1000 ainsi qu'une masse moléculaire moyenne comprise entre 4000 et 300.000.

2. Procédé selon la revendication 1, dans lequel on utilise en tant que sel polymère une carboxyméthylcellulose sodique ayant un degré de substitution compris entre 0,5 et 1, ou le sel de sodium d'un copolymère d'acide acrylique et/ou d'acide méthacrylique avec l'acide maléique dans un rapport molaire allant de 10 : 1 à 1 : 10.

3. Procédé selon la revendication 1 ou 2, dans lequel on ajoute de 0,5 à 3 % en poids, de préférence de 0,8 à 15 % en poids du sel polymère.

4. Procédé selon l'une quelconque des revendications 1 à 3, dans lequel on ajoute les sels polymères sous forme d'une composition aqueuse, qui contient au moins 20 % en poids, de préférence au moins 40 % en poids de sel.

5. Procédé selon l'une quelconque des revendications 1 à 4, qui est effectué dans une extrudeuse à plaque perforée ou dans un malaxeur à dispositif de granulation à panier perforé.

6. Procédé selon l'une quelconque des revendication 1 à 5, dans lequel le sel polymère est ajouté immédiatement avant la transformation, dans le dispositif d'extrusion.

7. Perborate tétrahydraté, préparable selon l'une quelconque des revendications 1 à 6.

8. Procédé pour la préparation de perborate monohydraté par déshydratation de perborate tétrahydraté, caractérisé en ce que l'on part d'un perborate tétrahydraté selon la revendication 7.

9. Procédé selon la revendication 8, dans lequel la déshydratation est effectuée dans un séchoir en lit fluidisé ou dans un séchoir vibrant, à l'aide d'air chaud.

10. Perborate monohydraté, préparable par un procédé selon une des revendications 8 ou 9.